# EUROPEAN PATENT APPLICATION

(11) **EP 1 054 542 A2**
(43) Date of publication of application: **22.11.2000**
(21) Application number: 00303285.1
(22) Date of filing: 18.04.2000
(51) Int. Cl.: H04L 29/02

(54) **Communication apparatus and method for controlling transmission**

(30) Priority: 17.05.1999 JP 13574899
(71) Applicant: FUJITSU LIMITED, Kawasaki-shi, Kanagawa 211-8588 (JP)
(72) Inventor: Nishiyama, Soichi, c/o Futjitsu Limited, Kawasaki-shi, Kanagawa 211-8588 (JP); Murakami, Koichi, c/o Futjitsu Limited, Kawasaki-shi, Kanagawa 211-8588 (JP); Yasaki, Masatomo, c/o Futjitsu Limited, Kawasaki-shi, Kanagawa 211-8588 (JP); Noda, Masahide, c/o Fujitsu Limited, Kawasaki-shi, Kanagawa 211-8588 (JP)
(74) Representative: Fenlon, Christine Lesley

(57) **Abstract**

A communication apparatus including a communication part (11) for enabling communication with another apparatus and a transmission part (12) for sending communication data to the communication part (11), further includes: a line detection part (13) for detecting first line information for communication line transmission from the communication data sent from the transmission part (12) to the communication part (11); a rejection line database (14) for storing second line information for rejection of transmission; transmission determination part (15) for comparing the first line information detected in the line detection part (13) with the rejection line database (14), and determining whether or not transmission should be conducted; and a communication data abandoning part (16) for abandoning the communication data, based on a determination result in the transmission determination part (15), wherein, in the case where the first line information detected in the line detection part (13) is present in the second line information in the rejection line database (14), the communication data sent from the transmission part (12) is abandoned.

## Description

The present invention relates to a communication apparatus capable of controlling transmission through a particular line in the case of connection to the Internet or the like.

In recent years, due to the widespread use of the Internet, ordinary households can be easily connected to the Internet, whereby its use is further expanding to browsing of home pages, exchanging of E-mail messages, etc. While anybody can easily utilize the Internet environment, a number of problems regarding a connection can occur.

An example of the problems, which has been noted, is the following: In the Internet connection by a personal computer (hereinafter, referred to as a "PC"), a connection is sometimes switched to a foreign server without the user's knowledge, and an exorbitant amount is charged to the user for unwitting communication through a foreign line.

It is conceivable that the problems as described above occur roughly in the following two cases. One of the cases is where a user downloads a program such as a game from a home page or the like and executes it. More specifically, when the downloaded program includes a program that switches a communication program to international transmission, any communication program is always switched to international transmission after the completion of the downloaded program. For example, in Windows 95 or the like that is the most widespread OS (operating system), international transmission is often added to the setting "Dialup Network", and a program for defining the setting as "Standard Setting" is often incorporated. Accordingly, if a user is not aware of such switching, the above-mentioned problem occurs.

The other of the cases is where a user downloads a program for filling in a questionnaire from a home page or the like and executes it. In this case, an international transmission program is simultaneously allowed to stay resident, and the program is run when a PC is rebooted. In Windows 95 or the like, a shortcut of the international transmission program is often added to the setting "Start-up". Therefore, if a user does not delete the international transmission program, the above-mentioned problem occurs.

It is also conceivable that the above-mentioned problems are caused by the following: Once a communication setting in a PC is defined in the first communication, it is not required to confirm the setting any more. However, it is a troublesome operation for a user to check a communication destination and the like every time, and there is a tendency to minimize user's recognition of such an operation. Thus, it cannot be expected to overcome the problems by user's operation and management.

It is also conceivable that, in the same way as in eradication of a computer virus, after confirming a program and the like for switching a communication path, a program-deleting program and the like is allowed to stand resident, whereby the program for switching a communication path is deleted in a programming manner before execution. However, as in the case of eradication of a computer virus, every time a third party bearing ill will develops a new program for switching a communication path, it is required to develop a program for deleting the new program. Therefore, this may not be effective for practical use.

Furthermore, in general, an API (Application Interface) for setting a communication destination is often made available for general use. Thus, there is an implicit problem that it is easy to switch a communication path by an arbitrary external application, using the API.

Accordingly it is desirable to provide a communication apparatus and method for controlling transmission capable of preventing transmission to a particular number (e.g., overseas number) which a user is not aware of, by checking a communication destination on a transmission side.

According to a first aspect of the present invention a communication apparatus for controlling transmission includes a communication part for enabling communication with another apparatus and a transmission part for sending communication data to the communication part. The apparatus further includes: a line detection part for detecting first line information for communication line transmission from the communication data sent from the transmission part to the communication part; a rejection line database for storing second line information for rejection of transmission; a transmission determination part for comparing the first line information detected in the line detection part with the rejection line database, thereby determining whether or nor transmission should be conducted; and a communication data abandoning part for abandoning the communication data based on a determination result in the transmission determination part, wherein, in a case where the first line information detected in the line detection part is present in the second line information in the rejection line database, the communication data sent from the transmission part is abandoned, and in a case where the first line information detected in the line detection part is not present in the second line information, the communication data is transmitted from the communication part.

Because of the above structure, it is possible to automatically determine whether or not the line information is appropriate before transmission, and to prevent communication which a user is not aware of.

Furthermore, it is preferable that a communication apparatus for controlling transmission embodying the first aspect of the present invention includes a permission line database for storing third line information for permission of transmission, in place of the rejection line database, wherein, in the transmission determination part, the first line information detected in the line detection part is compared with the permission line database, and in a case where the first line information detected in the line detection part is not present in the third line information in the permission line database, the communication data sent from the transmission part is abandoned. This is because communication data cannot be transmitted to a line number that is not registered in the permission line database; as a result, transmission can be controlled.

Furthermore, it is preferable that a communication apparatus for controlling transmission embodying the first aspect of the present invention includes a line database for storing both the second line information and the third line information, in place of the rejection line database, wherein, in the transmission determination part, the first line information detected in the line detection part is compared with the line database, whereby it is determined whether or not transmission should be conducted, in a case where the first line information detected in the line detection part is present in the second line information in the line database, the communication data sent from the transmission part is abandoned, and in a case where the first line information detected in the line detection part is not present in the third line information, the communication data sent from the transmission part is abandoned. This is because a combination of both the databases enables more detailed transmission control to be performed.

Furthermore, it is preferable that a communication apparatus for controlling transmission embodying the first aspect of the present invention includes a line storage part for storing fourth line information in the previous communication, in place of the rejection line database, wherein, in the transmission determination part, the first line information detected in the line detection part is compared with the fourth line information, and the apparatus further comprises a transmission confirmation part for transmitting the communication data sent from the transmission part, from the communication part, in a case where the first line information detected in the line detection part is present in the fourth line information in the line storage part, and notifying a user of absence of the first line information in a case where the first line information detected in the line detection part is not present in the fourth line information. This is because, simply by determining whether or not the current information is identical with the previously transmitted information, transmission which a user is not aware of can be controlled with good precision.

According to a second aspect of the present invention a communication apparatus for controlling transmission includes a communication part for enabling communication with another apparatus and a transmission part for sending communication data to the communication part. The apparatus further includes: a monitor module for monitoring a communication state in the communication part; a look-up list for previously registering first line information which a user is aware of; a line transmission comparison part for extracting second line information regarding a transmission line, when the monitor module detects transmission, and comparing the second line information with the look-up list, thereby determining whether or not the second line information is present in the first line information; and a notification display part for displaying to a user a comparison result in the line transmission comparison part.

Because of the above structure, communication can be always monitored at a communication program level. As a result, when communication is started through a line which a user is not aware of, the user can recognize it, thereby taking appropriate measures.

Furthermore, it is preferable that a communication apparatus for controlling transmission embodying the second aspect of the present invention further includes a pattern list for previously registering a transmission number pattern of line information for rejection of transmission, wherein, in the line transmission comparison part, the line information is compared with the pattern list, whereby it is determined whether or not the line information matches with the transmission number pattern. This is because appropriate measures can be taken in accordance with the results of determination.

Furthermore, according to a third aspect of the present invention there is provided a communication method for controlling transmission, including the operations of: detecting first line information for communication line transmission from communication data to be transmitted; comparing the first line information with a rejection line database for storing second line information for rejection of transmission, thereby determining whether or not transmission should be conducted; and abandoning the communication data based on a determination result, wherein the communication data is abandoned in a case where the first line information is present in the second line information in the rejection line database. According to a fourth aspect of the present invention there is also provided a computer-readable recording medium recording the above-mentioned operations as a program.

Because of the above structure, a communication apparatus for controlling transmission can be obtained, in which the above-mentioned program is loaded onto a computer for execution and whether or not the line information is appropriate can be automatically determined before transmission; as a result, communication which a user is not aware of can be prevented.

Furthermore, according to a fifth aspect of the present invention there is provided a communication method for controlling transmission, including the operations of: monitoring a communication state; extracting second line information regarding a transmission line, when detecting transmission, comparing the second line information with a look-up list for previously registering first line information which a user is aware of, and determining whether or not the second line information is present in the first line information; and displaying a comparison result to a user. According to a sixth aspect of the present invention there is also provided a computer-readable recording medium recording the above-mentioned operations as a program.

Because of the above structure, a communication apparatus for controlling transmission can be obtained, in which communication can be always monitored at a communication program level by loading the program onto a computer for execution, and when communication is started through a line which a user is not aware of, the user can recognize it, thereby taking appropriate measures.

Reference will now be made, by way of example, to the accompanying drawings, in which:
Figure 1 is a block diagram of a communication apparatus for controlling transmission of Embodiment 1 according to the present invention.
Figure 2 is a block diagram of a communication apparatus for controlling transmission of one example embodying the present invention.
Figure 3 is a block diagram of a communication apparatus for controlling transmission of another example embodying the present invention.
Figure 4 is a block diagram of a communication apparatus for controlling transmission of another example embodying the present invention.
Figure 5 is a block diagram of a communication apparatus for controlling transmission of another example embodying the present invention.
Figure 6 is a block diagram of a communication apparatus for controlling transmission of another example embodying the present invention.
Figure 7 is a block diagram of the communication apparatus for controlling transmission of Embodiment 1 according to the present invention.
Figure 8 is a flow chart of processing in the communication apparatus for controlling transmission of Embodiment 1 according to the present invention.
Figure 9 is a block diagram of a communication apparatus for controlling transmission of Embodiment 2 according to the present invention.
Figure 10 is a flow chart of processing in a monitor module in the communication apparatus for controlling transmission of Embodiment 2 according to the present invention.
Figure 11 is a flow chart of processing in a line transmission comparison part in the communication apparatus for controlling transmission of Embodiment 2 according to the present invention.
Figure 12 is a block diagram of a communication apparatus for controlling transmission of one example embodying the present invention.
Figure 13 illustrates recording media.

### Embodiment 1

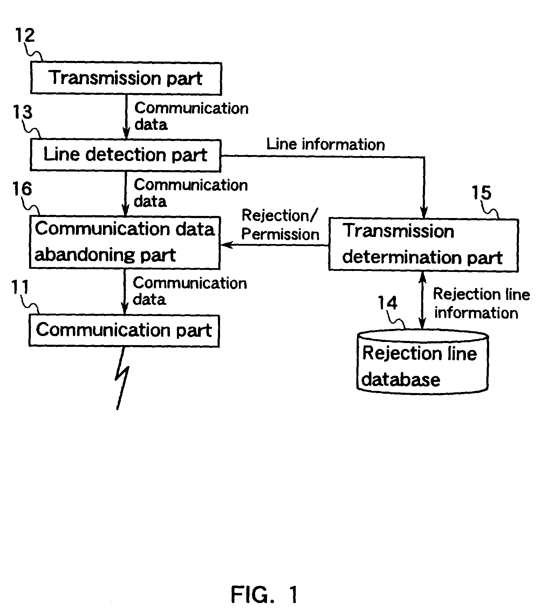

Hereinafter, a communication apparatus for controlling transmission of Embodiment 1 according to the present invention will be described with reference to the drawings. Figure 1 is a block diagram of a communication apparatus for controlling transmission of Embodiment 1 according to the present invention. In Figure 1, reference numerals 11, 12, 13, 14, 15, and 16 denote a communication part, a transmission part, a line detection part, a rejection line database, a transmission determination part, and a communication data abandoning part, respectively.

In Figure 1, the communication apparatus communicates with an external computer on the Internet via the communication part 11. In this case, conventionally, communication data is prepared in the transmission part 12, and directly sent to the communication part 11, whereby communication is conducted with the external computer.

In Embodiment 1, a control block for rejecting transmission through a particular line is provided between the communication part 11 and the transmission part 12. More specifically, the communication data prepared in the transmission part 12 is first sent to the line detection part 13. The line detection part 13 extracts only line information from the communication data and sends it to the transmission determination part 15. The communication data is sent to the communication data abandoning part 16. The line information includes a destination telephone number, an IP (Internet Protocol) address, etc.

Next, the transmission determination part 15 compares the line information thus obtained with the rejection line database 14. If the line information matches with a record of the rejection line database 14, a communication rejection signal is sent to the communication data abandoning part 16. If the line information does not match with a record of the rejection line database 14, a communication permission signal is sent to the communication data abandoning part 16. Herein, the rejection line database 14 stores numbers of lines through which information should not be transmitted, IP addresses (URL names) of destination sewers, and the like. In this case, if a telephone number and the like of a line to be specified is known, the telephone number can be directly specified. In most cases, wildcards and the like are used in such a manner that information data is not transmitted to destinations having telephone numbers starting with "0011", for example.

When receiving a communication rejection signal, the communication data abandoning part 16 deletes communication data itself so as not to transmit it to the external computer. In contrast, when receiving a communication permission signal, the communication data abandoning part 16 sends the communication data to the communication part 11, whereby processing similar to normal communication is conducted.

In Embodiment 1, a rejection line database is used. However, a database to be consulted is not limited thereto. A permission line database may be used, which stores numbers of lines through which communication can be permitted. In this case, although a communication apparatus is for permitting transmission through a particular line, the apparatus rejects transmission through lines that are not stored in the database; as a result, a communication apparatus for controlling transmission is obtained.

Furthermore, a line database may be used, which stores numbers of lines through which communication can be permitted, as well as numbers of lines through which communication should be rejected. Such a combination allows more appropriate rejection and permission conditions to be set.

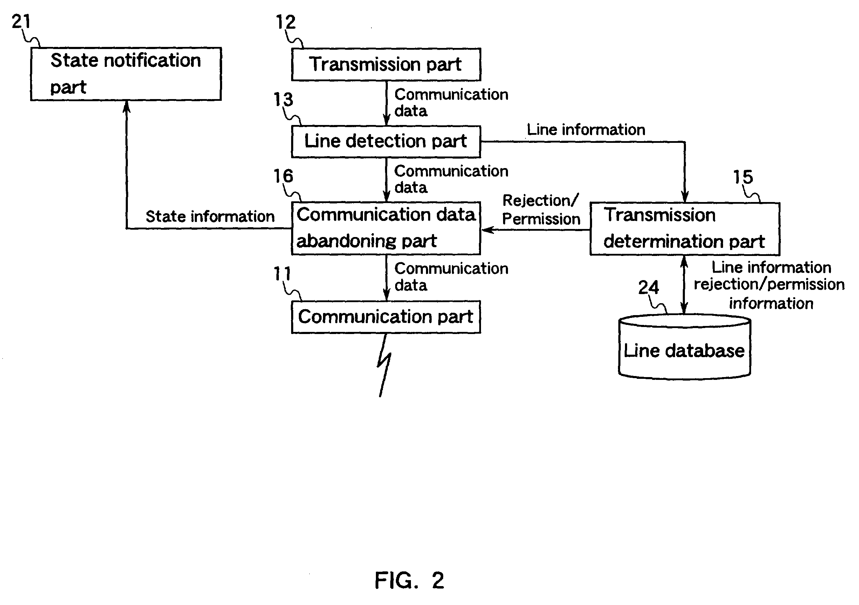

It is also possible that a user is notified of abandonment of communication data in the communication data abandoning part 16. As shown in Figure 2, when the communication data abandoning part 16 receives a communication rejection signal from the transmission determination part 15, a state notification part 21 is notified of rejection of communication data. In this manner, the user is notified of rejection of communication data which the user is flying to transmit, thereby becoming able to take appropriate measures such as changing of a telephone number of a communication line.

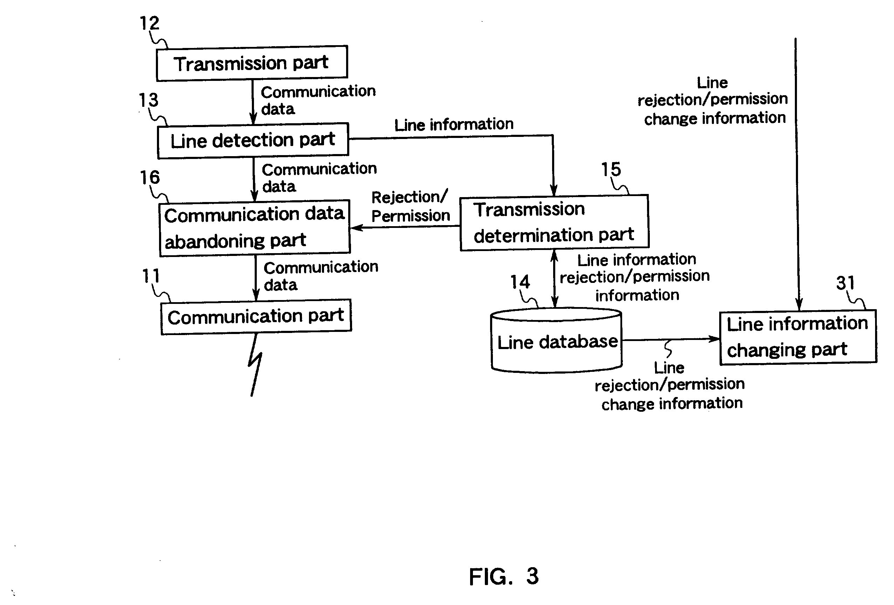

Furthermore, it is preferable that the user can arbitrarily update information regarding rejection lines and permissions. More specifically, it is preferable that the user can arbitrarily update the line database 24 via a line information changing part 31, as shown in Figure 3. This allows the user to conduct transmission control which satisfies the user's needs.

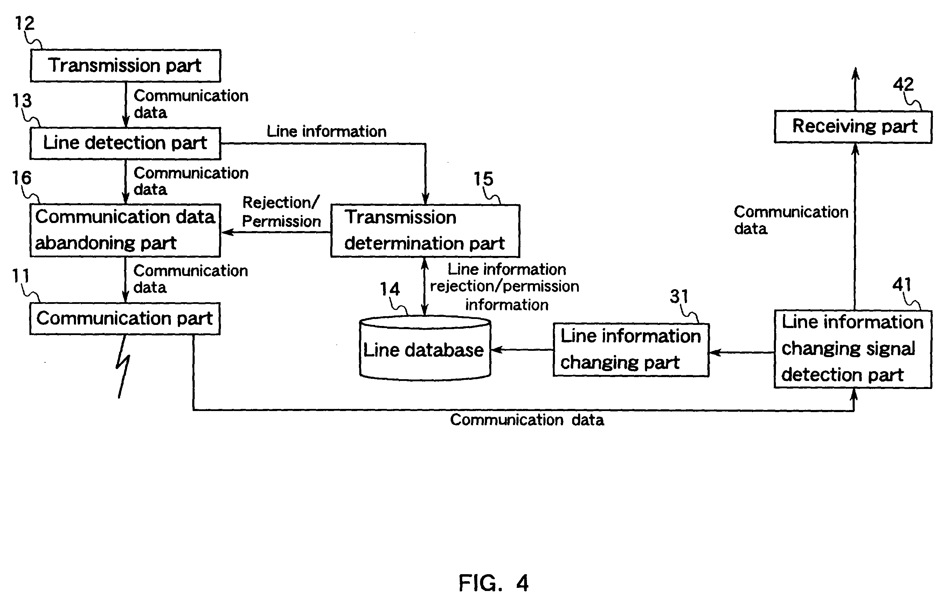

In this case, line information may be changed in the apparatus, as shown in Figure 3. Alternatively, line information may be changed via an external line, as shown in Figure 4. More specifically, as shown in Figure 4, when a receiving part 42 receives communication data via the communication part 11, a line information changing signal detection part 41 extracts change information regarding line information from the communication data, and sends it to the line information changing part 31. An example of such a service includes a download service that is often used for distributing a pattern file of a computer virus used for a computer virus eradication program.

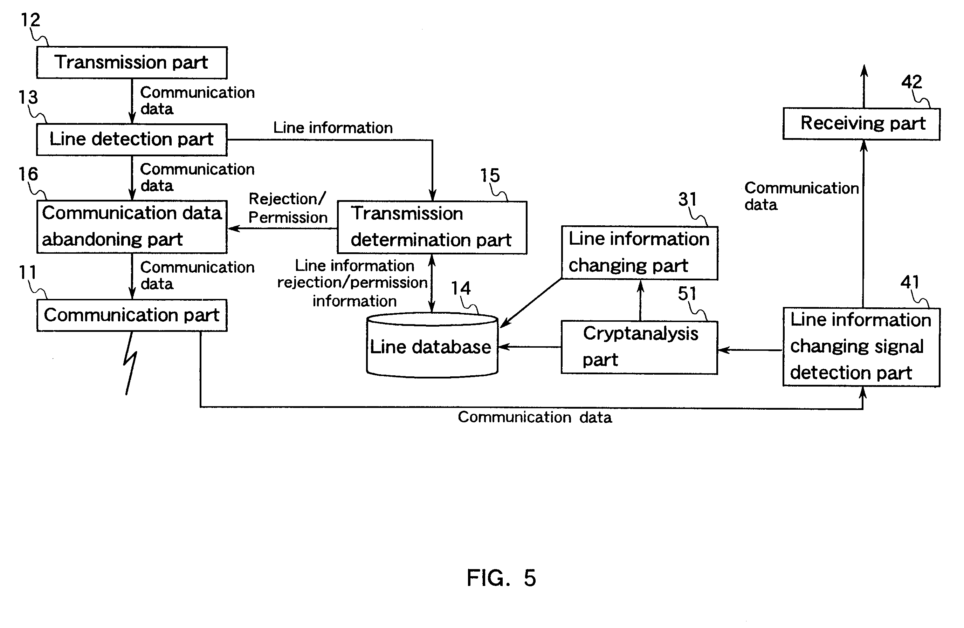

Furthermore, in order to keep confidentiality of line information itself, it is also conceivable that communication data is encrypted, as shown in Figure 5. In this case, it is required to provide a cryptanalysis part 51 between the line information changing signal detection part 41 and the line information changing part 31. An encryption scheme is not particularly limited, and any encryption scheme may be used.

In general, the user rarely changes setting of communication that is once determined. Therefore, simply by referring to communication information used in the previous communication, the user can readily detect whether or not a communication line has been changed.

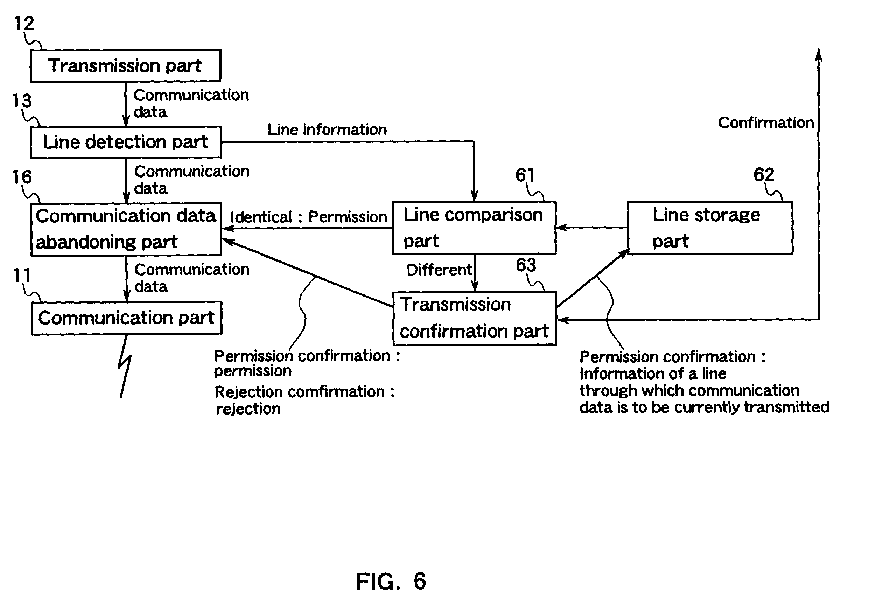

For example, as shown in Figure 6, line information used in the previous communication is stored in a line storage part 62. In a line comparison part 61, the line information, extracted in the line detection part 13 at the beginning of communication, is compared with the information stored in the line storage part 62. Thus, it becomes possible to easily determine whether or not the current line is identical with the previous one through which the previous communication has been conducted.

When the current line is identical with the previous one, a transmission permission signal is sent to the communication data abandoning part 16, whereby communication data is sent to the communication part 11 to be transmitted to the external computer. On the other hand, when the current line is not identical with any line stored in the line storage part 62, the user inputs whether or not transmission is permitted in a transmission confirmation part 63. This process is provided for the following reason: Even when there is no line with which the current line is identical, it may be conceivable that the user has intentionally changed line information. A transmission permission signal or a transmission rejection signal is sent to the communication data abandoning part 16 in accordance with a user's input, based on which it is determined whether or not communication is continually conducted.

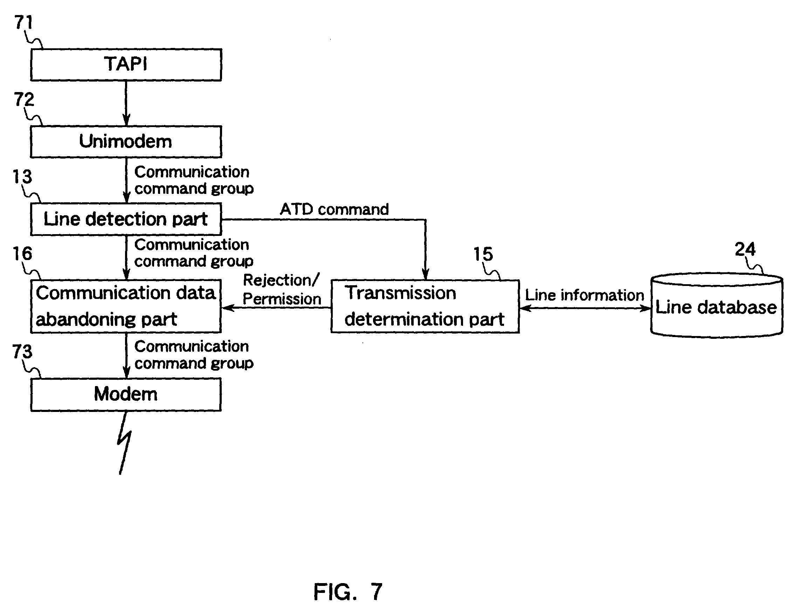

More specifically, the above-mentioned constitution results in the one shown in Figure 7. Figure 7 is a detailed block diagram of the communication apparatus for controlling transmission of Embodiment 1 according to the present invention.

Referring to Figure 7, in a conventional communication apparatus, a communication command group is generated in a unimodem 72 via a TAPI (Telephony Application Programming Interface) 71 that is an interface with an application in the apparatus, and the apparatus communicates with an external computer via a modem 73. In the present example, a control block for rejecting transmission through a particular line is provided between the unimodem 72 and the modem 73.

More specifically, in the line detection part 13, an ATD command containing line information, for example, is extracted from the communication command group generated in the unimodem 72, and the ATD command is sent to the transmission determination part 15. Then, the line information given as an argument of the ATD command is compared with the line database 24. When the line information matches with a record of the line database 24 and the line is determined to be rejected for transmission, a communication rejection signal is sent to the communication data abandoning part 16. In contrast, when the line information does not match with a record of the line database 24 and the line is determined to be permitted, a communication permission signal is sent to the communication data abandoning part 16. Upon receiving a communication rejection signal, the communication data abandoning part 16 deletes the communication data itself, whereas upon receiving a communication permission signal, it sends the communication data to the modem 73 to start communication.

Examples of the information to be registered in the line database 24 include communication permission numbers using wildcards and a communication rejection signal, and specified communication permission numbers and a communication rejection signal. Alternatively, it is conceivable that a composite button is provided, which is capable of rejecting all the international telephone communication, information fee automatic accounting service (called "dial Q2" which is provided by Nippon Telegram and Telephone Corp. (NTT) in Japan), and the like.

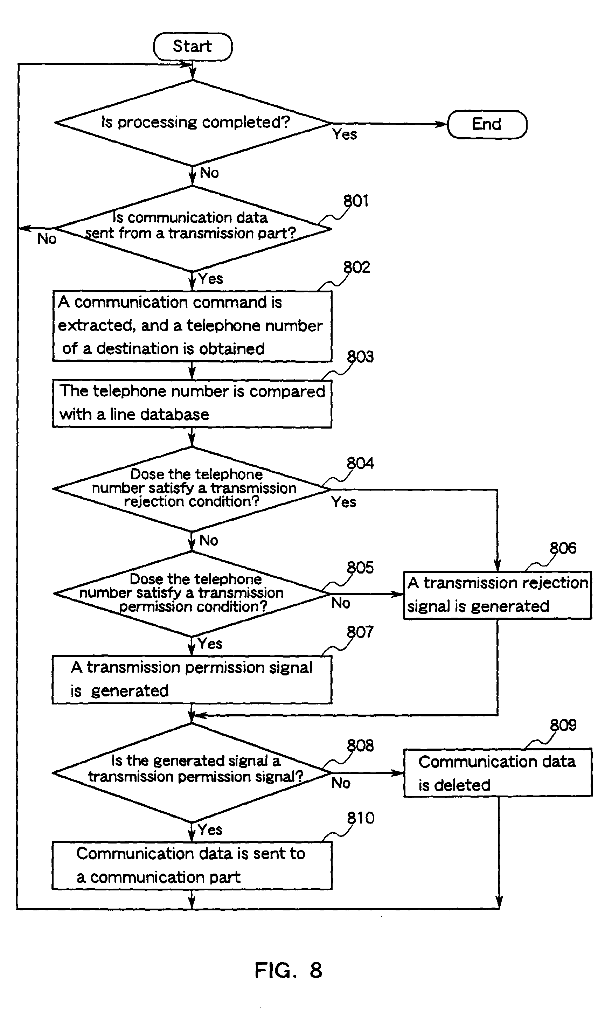

Next, processing of a program will be described, which realizes the communication apparatus for controlling transmission of Embodiment 1 according to the present invention. Figure 8 is a flow chart showing the processing of a program realizing the communication apparatus for controlling transmission of Embodiment 1 according to the present invention.

In Figure 8, when communication data is sent from the transmission part 12 (Operation 801: Yes), a communication command (e.g., ATD) command) containing line information is extracted from the communication data, and a telephone number of a destination is obtained from the communication command (Operation 802). The telephone number of the destination is compared with a line database (Operation 803).

When the extracted telephone number satisfies a transmission rejection condition registered in the line database, a transmission rejection signal is generated (Operation 804: Yes). Otherwise, the process proceeds to the operation of referring to a transmission permission condition (Operation 804: No). When the extracted telephone number satisfies the transmission permission condition, a transmission permission signal is generated (Operation 805: Yes, Operation 807). Otherwise, a transmission rejection signal is generated (Operation 805: No, Operation 806).

If the generated signal is a transmission rejection signal, the communication data itself is deleted (Operation 808: No, Operation 809). If the generated signal is a transmission permission signal, the transmission data is sent to the communication part 11 (Operation 808: Yes, Operation 810), whereby communication with a destination which the user is not aware of can be prevented.

As described above, according to Embodiment 1, the telephone number and the like of a destination can be confirmed before the commencement of communication. Therefore, communication with a destination which a user is not aware of as a communication partner can be prevented.

However, there is a case in data transmission where communication data is transmitted under the condition of being divided by time-division. In this case, the first communication data contains line information, and the second and the subsequent communication data does not contain line information. Therefore, in Figure 8, the second and subsequent communication data is directly sent to the communication part (Operation 810) from the communication data processing (Operation 801). When the end of the communication data is detected, the processing is completed (Operation 801: No).

### Embodiment 2

Next, a communication apparatus for controlling transmission of Embodiment 2 according to the present invention will be described with reference to the drawings.

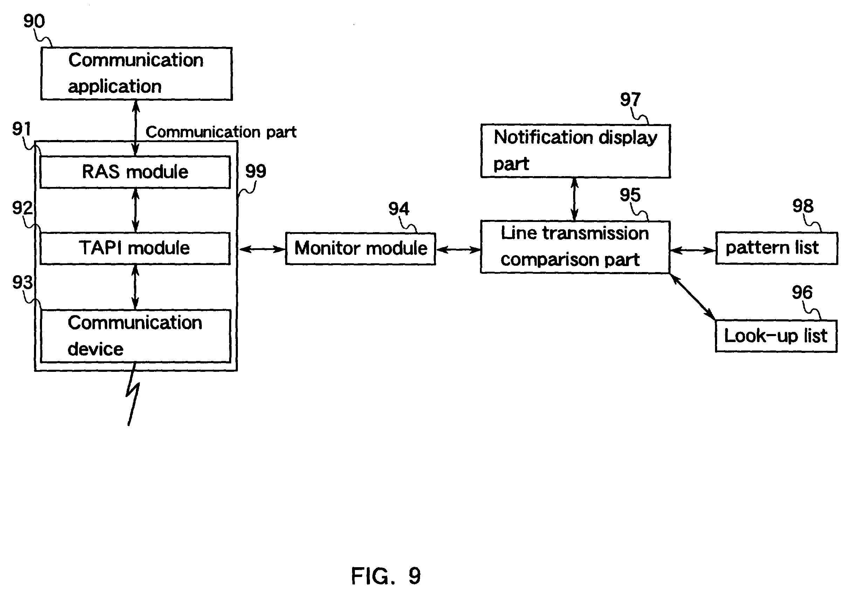

Figure 9 is a block diagram of a communication apparatus for controlling transmission of Embodiment 2 according to the present invention. Unlike Embodiment 1, effects similar to those in Embodiment 1 are obtained by monitoring a communication state between communication modules in a communication part 99.

In Figure 9, the communication part 99 is composed of a RAS (Remote Access Service) module 91, a TAPI module 92, and a communication device 93, respectively. Reference numerals 94, 95, 96, 97, and 98 denote a monitor module (resident process) for monitoring a communication state between the communication modules, a line transmission comparison part for consulting a look-up list and the like, a look-up list for registering entry names and telephone numbers thereof, of which transmission a user permits, a notification display part for displaying a comparison result in the line transmission comparison part 95, and a pattern list for registering transmission number patterns and the like.

In Figure 9, timing information showing a timing at which transmission is started can be obtained by using the monitor module 94 for monitoring the RAS module 91 and the TAPI module 92 that are communication modules included in the communication part 99. The timing information is often a communication command issued between the modules. The timing information is sent to the line transmission comparison part 95. In the line transmission comparison part 95, a destination line number information and the like is obtained from the timing information, and compared with the look-up list 96. If the line number matches with that in the look-up list 96, communication through the line number is determined to be normal, and the user is not notified of this. In contrast, if the line number does not match with any number in the look-up list 96, it is determined that communication is started with respect to a line number which the user does not expect, and the user is notified of this by a message and the like displayed in the notification display part 97 such as a display. In this case, by further consulting the pattern list 98, the user can be concurrently notified of whether the line number is an international telephone number, an information fee automatic accounting service number, or the like.

The user can determine whether or not communication should be continued, by confirming the received message. Accordingly, communication through an international telephone line which the user is not aware of and communication through information fee automatic accounting service can be prevented. Alternatively, the user becomes possible to take measures such as disconnecting a line.

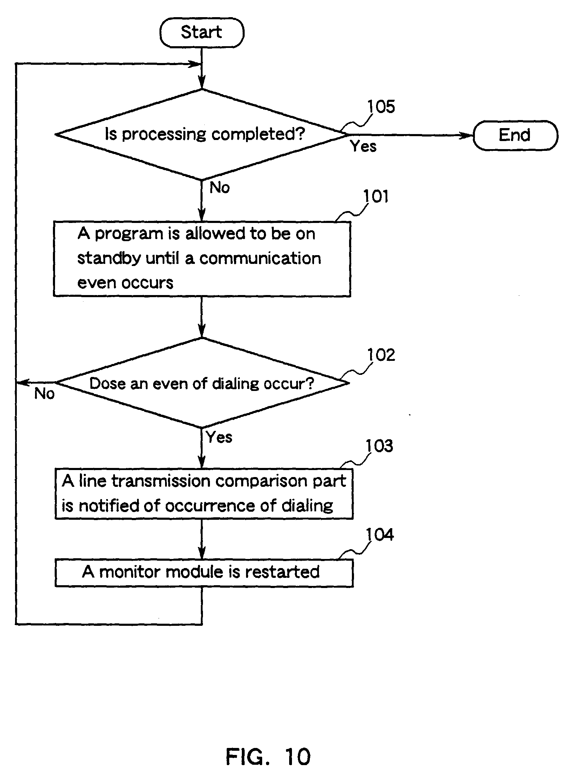

As an example of the communication apparatus for controlling transmission of Embodiment 2, it is conceivable that the above-mentioned timing information is notified as occurrence of dialing. More specifically, the processing of the program in the monitor module 94 is as shown in Figure 10.

In Figure 10, first, a program is run, and is allowed to be on standby until an event occurs (Operation 101). When an event of dialing occurs in the communication modules (Operation 102: Yes), the line transmission comparison part 95 is notified of occurrence of dialing (Operation 103). Then, the program returns to a mode of monitoring an event and is allowed to be on standby (Operation 104)

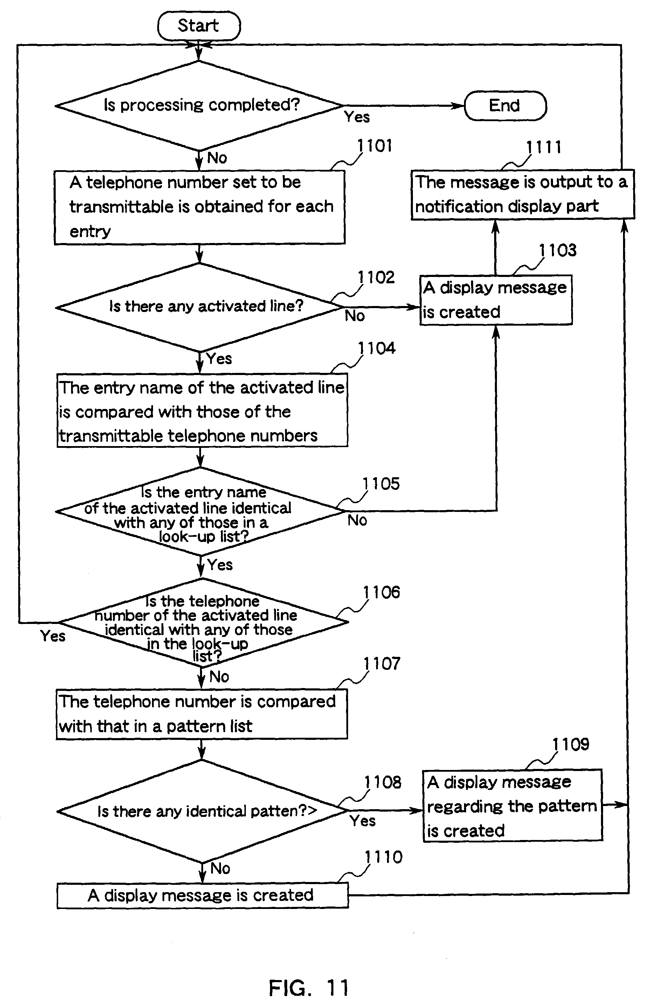

The processing in the line transmission comparison part 85 is as shown in Figure 11. In Figure 11, when the line transmission comparison part 85 is notified of occurrence of dialing from the monitor module 94, it collects latest setting information on a communication system and obtains a telephone number set to be transmittable for each entry (Operation 1101).

Then, it is attempted to obtain activated line information (Operation 1102). This is because there is also a case where activated line information cannot be obtained, depending upon the level of communication API (Application Interface) used by a communication application. When activated line information cannot be obtained, the user is notified of that a destination cannot be specified by a display (Operation 1103, Operation 1111). For example, a message such as "Since a telephone number cannot be detected, the detail thereof cannot be checked" is created (Operation 1103) and displayed (Operation 1111).

When activated line information is obtained, the line information is compared with the transmittable telephone number for each entry obtained in the previous operation, whereby it is confirmed whether or not the currently conducted communication is directed to the set destination (Operation 1104).

More specifically, an entry name and a telephone number thereof are extracted from the activated line information, and compared with the look-up list (Operation 1105, Operation 1106). First, it is checked if the entry name is registered in the look-up list (Operation 1105). This is because the activated line can be specified if the entry name is registered. When the entry name is not registered, a telephone number cannot be checked. Therefore, for example, a message such as "Since a telephone number cannot be detected, the detail thereof cannot be checked" is created (Operation 1103) and displayed (Operation 1111).

Then, the telephone number of the activated entry is compared with those registered in the look-up list (Operation 1106). When the telephone number of the activated entry matches with that registered in the look-up list, the user is not notified of this (Operation 1106: Yes). This is because transmission is conducted to the telephone number which the user is aware of. When there is no matching (Operation 1106: No), for example, a message such as "Transmission to the telephone number (001 ...) was detected through an entry (AA)" is created (Operation 1110), and the user is notified of this by a display (Operation 1111).

By further consulting the pattern list (Operation 1107), information regarding the kind, characteristics, and the like of the telephone number of the destination is obtained, and the user is also notified of such information. For example, when pattern information that "001" is "international telephone communication" is registered in the pattern list, in the case where the telephone number of the activated destination reads "001 ..." from the top, it is determined that the activated entry matches with the pattern (Operation 1108: Yes). Then, a message such as "This number relates to international telephone communication" is created (Operation 1109), and the user can also be notified of the message (Operation 1110) regarding the telephone number information on the activated entry (Operation 1111).

As described above, a transmission state in the communication modules is always monitored, whereby line information and the like required when communication is started can be obtained, and the user can visually confirm whether or not inappropriate transmission is conducted.

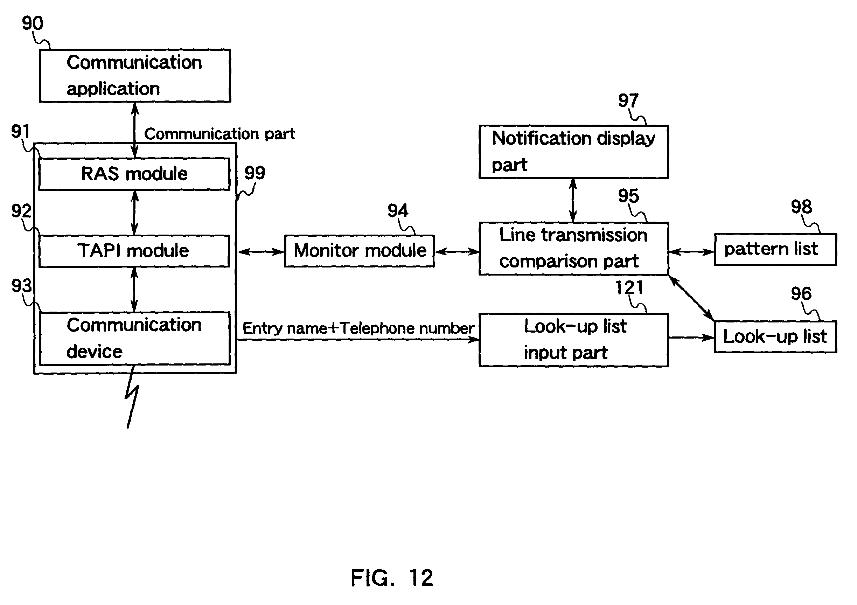

Furthermore, registration in the look-up list is conducted through a look-up list input part 121 as shown in Figure 12. In this case, the user can directly input data using an input medium such as a keyboard. It is also possible that a number which can be registered is selected based on the entry name and the telephone number extracted from the communication modules, whereby registration can be performed without direct input.

As described above, according to Embodiment 2, a transmission state in the communication modules is always monitored. Therefore, it becomes possible to confirm line information and the like when a communication command is issued, and to prevent communication with a destination which the user is not aware of as a communication partner.

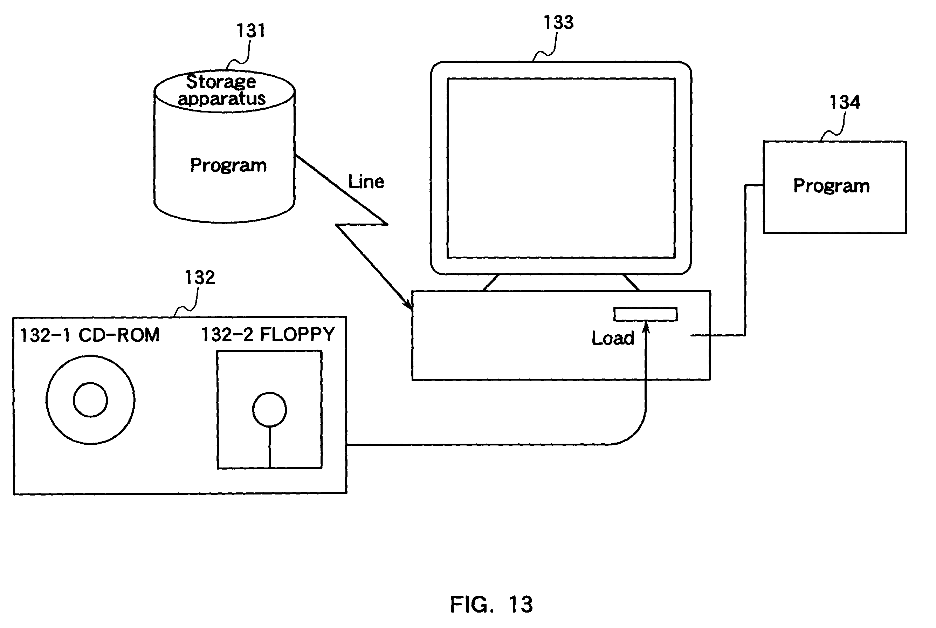

A recording medium storing a program that realizes the communication apparatus for controlling transmission in the embodiments according to the present invention is not limited to a portable recording medium 132 such as a CD-ROM 132-1 and a floppy disk 132-2 as shown in Figure 13. The recording medium may be another storage apparatus 131 provided at the end of a communication line, a recording medium 134 such as a hard disk and a RAM of a computer, and the like. In this case, the program is loaded and executed on a main memory.

A recording medium storing a line database and the like used by the transmission apparatus for controlling transmission in the embodiments according to the present invention is not limited to a portable recording medium 132 such as a CD-ROM 132-1 and a floppy disk 132-2 as shown in Figure 13. The recording medium may be another storage apparatus 131 provided at the end of a communication line, a recording medium 134 such as a hard disk and a RAM of a computer, and the like. For example, the recording medium is read by a computer 133 when the communication apparatus for controlling transmission of the present invention is used.

As described above, according to the present invention, a communication state is always monitored on a transmission side. Therefore, a telephone number and the like of a destination can be confined irrespective of whether it is before the commencement of communication, and communication with a destination which the user is not aware of as a communication partner can be prevented.

The invention may be embodied in other forms without departing from the spirit or essential characteristics thereof. The embodiments disclosed in this application are to be considered in all respects as illustrative and not limiting.

The above description has referred to a computer program stored on a computer-readable (or device - readable) medium. It will be appreciated that such a computer program (or operating program) can be used to operate any suitable Internet communication device (such as a personal computer, a work station, a mobile computer or a mobile phone). It will also be appreciated that a program embodying the present invention need not be stored on a computer-readable (device-readable) medium and could, for example, be embodied in a signal such as a downloadable data signal provided from an Internet website. The appended claims are to be interpreted as covering a program by itself, or as a record on a carrier, or as a signal, or in any other form.

## Claims

1. A communication apparatus for controlling transmission including a communication part for enabling communication with another apparatus and a transmission part for sending communication data to the communication part, further comprising:
a line detection part for detecting first line information for communication line transmission from the communication data sent from the transmission part to the communication part;
a rejection line database for storing second line information for rejection of transmission;
a transmission determination part for comparing the first line information detected in the line detection part with the rejection line database, thereby determining whether or nor transmission should be conducted; and
a communication data abandoning part for abandoning the communication data based on a determination result in the transmission determination part,
wherein, in a case where the first line information detected in the line detection part is present in the second line information in the rejection line database, the communication data sent from the transmission part is abandoned, and in a case where the first line information detected in the line detection part is not present in the second line information, the communication data is transmitted from the communication part.

2. A communication apparatus for controlling transmission according to claim 1, comprising a permission line database for storing third line information for permission of transmission, in place of the rejection line database,
wherein, in the transmission determination part, the first line information detected in the line detection part is compared with the permission line database, in a case where the first line information detected in the line detection part is not present in the third line information in the permission line database, the communication data sent from the transmission part is abandoned, and
in a case where the first line information is present in the third line information, the communication data is transmitted from the communication part.

3. A communication apparatus for controlling transmission according to claim 1, comprising a line database for storing both the second line information and the third line information, in place of the rejection line database,
wherein, in the transmission determination part, the first line information detected in the line detection part is compared with the line database, whereby it is determined whether or not transmission should be conducted,
in a case where the first line information detected in the line detection part is present in the second line information in the line database, the communication data sent from the transmission part is abandoned, and
in a case where the first line information detected in the line detection part is not present in the third line information, the communication data sent from the transmission part is abandoned.

4. A communication apparatus for controlling transmission according to claim 1, comprising a line storage part for storing fourth line information in the previous communication, in place of the rejection line database, wherein, in the transmission determination part, the first line information detected in the line detection part is compared with the fourth line information, and the apparatus further comprises a transmission confirmation part for transmitting the communication data sent from the transmission part, from the communication part, in a case where the first line information detected in the line detection part is present in the fourth line information in the line storage part, and notifying a user of absence of the first line information in a case where the first line information detected in the line detection part is not present in the fourth line information.

5. A communication apparatus for controlling transmission including a communication part for enabling communication with another apparatus and a transmission part for sending communication data to the communication part, comprising:
a monitor module for monitoring a communication state in the communication part;
a look-up list for previously registering first line information which a user is aware of;
a line transmission comparison part for extracting second line information regarding a transmission line, when the monitor module detects transmission, and comparing the second line information with the look-up list, thereby determining whether or not the second line information is present in the first line information; and
a notification display part for displaying to a user a comparison result in the line transmission comparison part.

6. A communication apparatus for controlling transmission according to claim 5, further comprising a pattern list for previously registering a transmission number pattern of line information for rejection of transmission, wherein, in the line transmission comparison part, the line information is compared with the pattern list, whereby it is determined whether or not the line information matches with the registered transmission number pattern.

7. A communication method for controlling transmission, comprising the operations of:
detecting first line information for communication line transmission from communication data to be transmitted;
comparing the first line information with a rejection line database for storing second line information for rejection of transmission, thereby determining whether or not transmission should be conducted; and
abandoning the communication data based on a determination result,
wherein the communication data is abandoned in a case where the first line information is present in the second line information in the rejection line database.

8. A communication method for controlling transmission, comprising the operations of:
monitoring a communication state;
extracting second line information regarding of a transmission line, when detecting transmission, comparing the second line information with a look-up list for previously registering first line information which a user is aware of, and determining whether or not the second line information is present in the first line information; and
displaying a comparison result to a user.

9. A computer-readable recording medium for recording a program to be executed by a computer, the program including the operations of: detecting first line information for communication line transmission from communication data to be transmitted; comparing the first line information with a rejection line database for storing second line information for rejection of transmission, thereby determining whether or not transmission should be conducted; and abandoning the communication data based on a determination result, wherein the communication data is abandoned in a case where the first line information is present in the second line information in the rejection line database.

10. A computer-readable recording medium for recording a program to be executed by a computer, the program including the operations of: monitoring a communication state; extracting second line information regarding a transmission line, when detecting transmission, comparing the second line information with a look-up list for previously registering first line information which a user is aware of, and determining whether or not the second line information is present in the first line information; and displaying a comparison result to a user.

11. A computer program which, when run on a computer, causes the computer to become apparatus as claimed in any one of claims 1 to 6.

12. A computer program which, when run on a computer, causes the computer to carry out a method as claimed in claim 7 or 8.
